# EUROPÄISCHE PATENTSCHRIFT

(11) **EP 1 688 210 B1**
(45) Veröffentlichungstag und Bekanntmachung des Hinweises auf die Patenterteilung: **04.07.2012**
(21) Anmeldenummer: 06000848.9
(22) Anmeldetag: 16.01.2006
(51) Int. Cl.: B23P 6/00, B23B 3/24, B24B 5/36, B24B 5/40, F03B 11/00, F03B 3/06, F03B 3/12

(54) **Vorrichtung und Verfahren zur mechanischen Bearbeitung einer Laufschaufel-Dichtungsfläche einer Kaplan-Turbine**
Device and method for the machining of a sealing surface of a Kaplan turbine rotor blade
Dipositif et méthode d'usinage d'une surface d'étanchéité d'une aube de rotor d'une turbine Kaplan

(30) Priorität: 27.01.2005 DE 102005004036; 27.01.2005 DE 202005001378 U
(43) Veröffentlichungstag der Anmeldung: 09.08.2006
(73) Patentinhaber: E.ON Wasserkraft GmbH, 84034 Landshut (DE)
(72) Erfinder: Bauer, Karl, 92536 Pfreimd (DE); Drygas, Alexius, 84570 Polling (DE)
(74) Vertreter: Bücken, Helmut

(56) Entgegenhaltungen:
- JP-A- 54 055 248
- US-A- 4 493 150
- US-A- 4 939 964
- US-A- 5 660 093

## Beschreibung

Die Erfindung betrifft eine Vorrichtung und ein Verfahren zur mechanischen Bearbeitung eines rotationssymmetrischen Dichtfläche, insbesondere einer Dichtfläche am Flügelteller einer Laufschaufel einer Kaplan-Turbine gemäß der Oberbegriffe der Ansprüche 1 und 17.

Eine solche Vorrichtung bzw. ein solches Verfahren sind aus US-A 4,939,964 bzw. JP 54 055 248 bekannt.

Die von dem österreichischen Ingenieur Viktor Kaplan entwickelte und nach ihm benannte Kaplan-Turbine ist eine axial durchströmte Wasserturbine. Die Laufräder von Kaplan-Turbinen weisen in der Regel 3 bis 5 Laufschaufeln (Flügel) auf. Einem wechselnden Durchsatz bzw. einem wechselnden Wassergefälle wird die Maschine durch Verstellung der Leit- und Laufschaufeln angepasst. Durch die Verstellung des Anstellwinkels der Leit- und Laufschaufeln wird der Wirkungsgrad der Kaplan-Turbine optimiert.

Die Laufräder im Einsatz befindlicher Kaplan-Turbinen weisen einen Durchmesser im Bereich von ca. 2 bis 8 m auf, wobei das Gewicht der Laufschaufeln mehrere Tonnen beträgt.

Das Aufbringen der Verstellkräfte und die Schmierung der Lagerstellen der Laufschaufeln erfolgt üblicherweise hydraulisch mittels Mineralöl. Um ein Entweichen des Hydraulik- bzw. Schmieröls in das Triebwasser zu vermeiden, sind die Laufradflügel mit einem Dichtungssystem versehen, welches üblicherweise aus einem am Flügel angegossenen "Teller" (Flügelflansch bzw. Schaufelflansch) besteht, der entweder in einer Dichtungspackung aus mehreren Lagen sogenannter Dachmanschetten aus Leder oder Gummi gleitet, oder in einer andersartig geformten Dichtung.

Diese Gleitbewegung führt zu Verschleiß am Flügelteller, selbst im ölgeschmierten Bereich. Von der Wasserseite her unterliegt der Flügelteller dem Korrosionsangriff durch das Triebwasser, sofern dieser nicht aus rostfreiem Werkstoff gefertigt ist. Die Korrosion von außen und der Verschleiß von innen führen mit der Zeit zu einem Leckwerden der Dichtpartie und damit zu einem Austritt von Schmieröl in das Triebwasser. Korrosion führt auch an der Dichtungsfläche am äußeren Durchmesser des die Dichtungspackung aufnehmenden ringförmigen zylindrischen Dichtungsraumes durch Rostnaben zu ungenügenden Dichtungseigenschaften und kann ebenfalls zu Austritt von Öl in das Triebwasser führen. Insbesondere nach Austausch eines Dichtungspakets.

Eine vorbeugende Instandsetzung der Dichtpartie erfolgte bisher, indem das Laufrad ausgebaut und vollständig zerlegt wurde. Dadurch konnten die Flügelteller in der Werkstatt wie bei einer Neufertigung auf herkömmlichen Werkzeugmaschinen bearbeitet werden.

Eine Reparatur der Dichtpartie ohne Bearbeitung der Dichtungsgleitfläche auf dem Flügelteller ist nicht sinnvoll, da die Einlaufriefen und Rostnarben innerhalb kurzer Zeit zu einem erneuten Undichtwerden führen.

Durch die mechanische Bearbeitung der Dichtungsgleitfläche am Flügelteller wird ein Zustand wie bei einer neuen Maschine hergestellt und eine Betriebszeit von weiteren 30 bis 40 Jahren erreicht.

Eine gattungsgemäße Vorrichtung ist aus der US-A 4,939,964 bekannt, die eine Vorrichtung nach dem Oberbegriff des Anspruchs 1 offenbart. Sie wird dazu verwendet, am Außenumfang von Rohren eine ringförmige Fläche für eine Schweißnaht vorzubereiten, über diese dann ein weiteres Rohr angeschweißt wird. Bei den Rohren handelt es sich um Pipelines oder Rohrleitungen in einem Atomreaktor.

Der vorliegenden Erfindung liegt die Aufgabe zugrunde, ein Verfahren sowie eine Vorrichtung anzugeben, die eine kostengünstige mechanische Bearbeitung der Dichtungsgleitfläche am Flügelteller einer Laufschaufel einer Kaplan-Turbine ermöglichen.

Hinsichtlich der Vorrichtung wird diese Aufgabe erfindungsgemäß durch eine Vorrichtung mit den Merkmalen des Anspruchs 1 gelöst.

Die Erfindung basiert auf der Idee, dass nur die an einem Flügelteller einer Laufschaufel angeordnete Dichtung entfernt werden muss und dass dann anstelle der Dichtung die Bearbeitungsvorrichtung eingesetzt werden kann.

Ferner wird die oben angegebene Aufgabe durch das im Anspruch 17 definierte Verfahren gelöst.

Aus der JP 54 055248 A, die ein Verfahren nach dem Oberbegriff des Anspruchs 17 offenbart, ist es zwar bekannt bei einer hydroelektrischen Turbine die umlaufende Dichtfläche einer Welle, die die Turbine mit dem Generator verbindet, nach Abbau der Dichtung zu bearbeiten. Hierzu wird anstelle der Dichtung ein feststehendes Bearbeitungswerkzeug angeordnet. Deshalb muss die Turbine gedreht werden, damit eine Bearbeitung der gesamten Dichtfläche möglich ist. Hierzu wird über ein separates Ventil die Turbine mit Wasserkraft beaufschlagt.
Eine derartige Anordnung ist bei einer Dichtungsgleitfläche an einem Flügelteller einer Laufschaufel einer Kaplan-Turbine nicht möglich.

Die erfindungsgemäße Vorrichtung ist so konzipiert und bemessen, dass ihr drehbarer Ringkörper in dem relativ eng begrenzten Lichtraumprofil unter der jeweiligen Laufschaufel durchlaufen kann.

Durch die mobile Bearbeitungsvorrichtung werden also der Ausbau und das Zerlegen des Kaplan-Laufrades vermieden, wodurch sich eine erhebliche Kosteneinsparung realisieren lässt.

Eine vorteilhafte Ausgestaltung der erfindungsgemäßen Bearbeitungsvorrichtung besteht darin, dass ihr drehbarer Ringkörper radial verstellbar gelagert ist. Diese Ausgestaltung ermöglicht bei einer Exzentrizität des Flügeltellers, die durch eventuell vorhandenen Verschleiß der Lagerstellen bedingt sein kann, eine Anpassung durch entsprechendes Ausrichten des drehbaren Ringkörpers mit dem daran angeordneten Bearbeitungswerkzeug auf die Mitte des Flügeltellers.

Die Antriebseinrichtung der erfindungsgemäßen Vorrichtung ist vorzugsweise aus einem mit dem drehbaren Ringkörper verbundenen Zahnkranz und einem Motor gebildet, wobei der Motor ein mit dem Zahnkranz kämmendes Zahnrad antreibt. Eine solche Antriebseinrichtung lässt sich relativ flach ausführen, wobei der Motor in Abstand zu der Laufschaufel angeordnet werden kann. Zugleich ist eine solche Antriebseinrichtung vom Aufbau her einfach und zuverlässig.

Der Motor der Antriebseinrichtung ist vorzugsweise ein drehzahlverstellbarer Motor. Die Bearbeitungsvorrichtung bietet dann die Möglichkeit, die Drehzahl des drehbaren Ringkörpers in Abhängigkeit des verwendeten Bearbeitungswerkzeuges einzustellen. Besonders bevorzugt wird ein Motor verwendet, dessen Drehzahl stufenlos verstellbar ist.

Als Bearbeitungswerkzeuge können in der erfindungsgemäßen Vorrichtung Drehmeißel, Schleifwerkzeuge sowie Fräswerkzeuge zum Einsatz kommen.

Nach einer weiteren vorteilhaften Ausgestaltung der erfindungsgemäßen Bearbeitungsvorrichtung ist vorgesehen, dass das jeweilige Bearbeitungswerkzeug an einer eigenen Halterung befestigt ist, die in eine Ausnehmung bzw. Aufnahmenut des drehbaren Ringkörpers einsetzbar und mit dem Ringkörper lösbar verbindbar ist. Diese Ausgestaltung ermöglicht nicht nur einen schnellen Werkzeugwechsel, sondern auch eine einfachere Voreinstellung des Bearbeitungswerkzeuges vor dessen eigentlichem Gebrauch.

Die Zustellung des Bearbeitungswerkzeuges kann bei der erfindungsgemäßen Vorrichtung mittels einer Gewindespindel oder hydraulisch erfolgen.

Weitere bevorzugte und vorteilhafte Ausgestaltungen der Erfindung sind in den Unteransprüchen angegeben.

Nachfolgend wird die Erfindung anhand einer ein Ausführungsbeispiel darstellenden Zeichnung näher erläutert.

Es zeigen:
- Fig. 1: einen Abschnitt einer Kaplan-Turbine im Laufzustand mit geschnitten dargestellter Laufradnabe und einer geschnitten dargestellten Laufschaufel (Laufradflügel);
- Fig. 2: einen-drehbaren Ringkörper einer erfindungsgemäßen Bearbeitungsvorrichtung auf einem Anpressring in perspektivischer Ansicht;
- Fig. 3: den Ringkörper und den Anpressring gemäß Fig. 2 zusammen mit einer ringförmigen Gleitführung, angeordnet in einem der Aufnahme einer Flügeldichtung dienenden Einbauraum der Laufradnabe in perspektivischer Ansicht, wobei die Laufschaufel und weitere Teile der Bearbeitungsvorrichtung der Übersichtlichkeit halber fortgelassen sind;
- Fig. 4: eine Darstellung gemäß Fig. 3, wobei ein Zahnkranz und eine Motorhalterung als weitere Teile der erfindungsgemäßen Vorrichtung gezeigt sind;
- Fig. 5: die Motorhalterung in gegenüber Fig. 4 vergrößerter, perspektivischer Darstellung;
- Fig. 6: einen Motor zum Antrieb des drehbaren Ringkörpers in perspektivischer Darstellung;
- Fig. 7: einen Abschnitt der Laufradnabe mit einer. eingebauten vollständigen erfindungsgemäßen Bearbeitungsvorrichtung in perspektivischer Darstellung, wobei die Laufschaufel der Übersichtlichkeit halber wiederum fortgelassen ist;
- Fig. 8: eine Darstellung entsprechend Fig. 7, jedoch mit Laufschaufel;
- Fig. 9: einen Abschnitt der Laufradnabe, des Laufschaufeltellers und der erfindungsgemäßen Vorrichtung in perspektivischer Darstellung und mit einer Vollschnittansicht durch den Motor; und
- Fig. 10: einen Abschnitt der Laufradnabe, des Laufschaufeltellers und der erfindungsgemäßen Vorrichtung in perspektivischer Darstellung und mit einer Vollschnittansicht durch eine Werkzeughalterung.

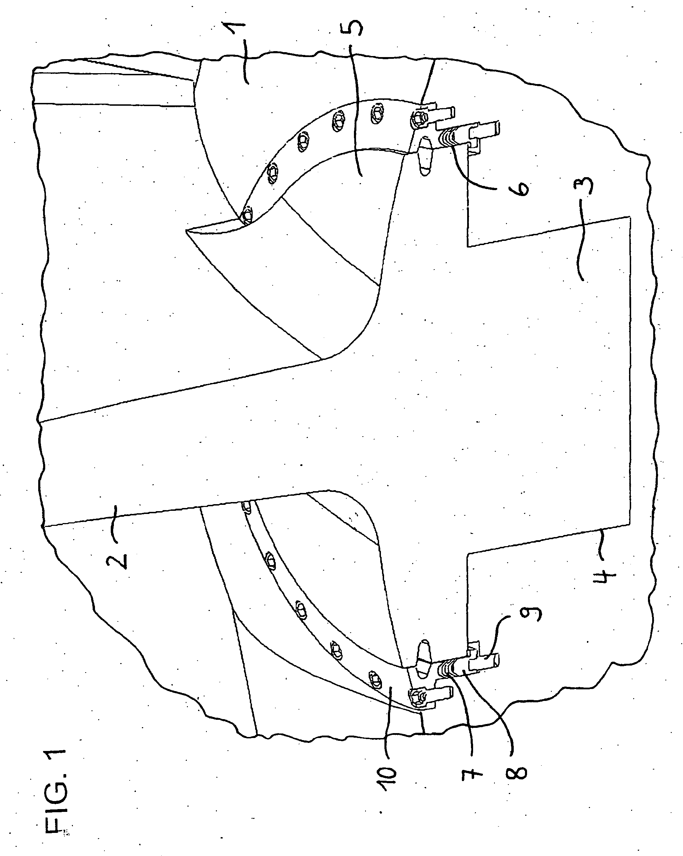

In Fig. 1 ist ein Abschnitt einer Kaplan-Turbine im Laufzustand dargestellt, wobei die Laufradnabe 1 und eine Laufschaufel 2 in einer Vollschnittansicht gezeigt sind. Das Laufrad der Kaplan-Turbine weist mehrere, z.B. vier verstellbare Laufschaufeln 2 auf. Die auch als Laufradflügel bezeichneten Laufschaufeln 2 sind in der Laufradnabe 1 drehbar gelagert. Ihr kreiszylindrisch ausgebildeter Laufschaufelfuß 3 ist drehbar in einer entsprechend ausgebildeten Ausnehmung 4 der Laufradnabe 1 aufgenommen.

Wie eingangs erwähnt, erfolgt die Verstellung der Laufschaufeln 2 hydraulisch unter Verwendung von Mineralöl. Mineralöl wird auch zur Schmierung der Lagerstellen verwendet. Um ein Entweichen von Mineralöl in das Triebwasser der Turbine zu verhindern, sind die verstellbaren Laufschaufeln 2 mit einem Dichtungssystem versehen. Wie in Fig. 1 gezeigt, umfasst das Dichtungssystem einen sogenannten Flügelteller 5 (Flügelflansch bzw. Schaufelflansch), der an der Laufschaufel 2 und dem Laufschaufelfuß 3 einstückig angegossen ist. Der kreisförmige Flügelteller 5 weist eine rotationssymmetrische Mantelfläche 6 auf, die eine Dichtungsgleitfläche darstellt und im Neuzustand eine glatte Oberfläche besitzt. Der Dichtungsgleitfläche 6 ist entweder eine Dichtungspackung 7 aus mehreren Lagen sogenannter Dachmanschetten aus Leder oder Gummi zugeordnet, oder eine andersartig geformte Dichtung.

Die Dichtungspackung 7 ist in einem ringförmigen Einbauraum aufgenommen, der den Flügelteller 5 umgibt. Unterhalb der Dichtungspackung 7 ist ein erster Anpressring 8 angeordnet, der durch eingeschraubte Stifte 9 und Spannschrauben mit der Laufradnabe 1 verbunden ist. Oberhalb der Dichtungspackung 7 ist ein zweiter Anpressring 10 angeordnet, der in mehrere kreisbogenförmige Segmenten unterteilt ist. Der Anpressring 10 ist ebenfalls mit der Laufradnabe 1 verschraubt. Der Anpressring 10 hält die Dichtung an Ort und Stelle und sorgt gemeinsam mit dem Druckring 8 für eine Vorspannung der Dichtung. Anpressring 10 und Druckring 8 können bei Verwendung anderer Dichtungen wie O-Ringe oder Sonderprofilringe anders geformt sein. Dies ändert jedoch nichts an dem nachstehend beschriebenen erfindungsgemäßen Bearbeitungsverfahren.

Die Dichtungsgleitfläche 6 des Flügeltellers 5 verschleißt infolge der Gleitreibung, die zwischen der Dichtungspackung 7 und Dichtungsgleitfläche 7 bei der relativ häufigen Verstellung der Laufschaufeln 2 auftritt. Zudem ist die Dichtungsgleitfläche 6 dem Korrosionsangriff durch das Triebwasser ausgesetzt. Dies führt mit der Zeit zur Undichtigkeit des Dichtungssystems und zu einem Austritt von Hydraulik- bzw. Schmieröl in das Triebwasser.

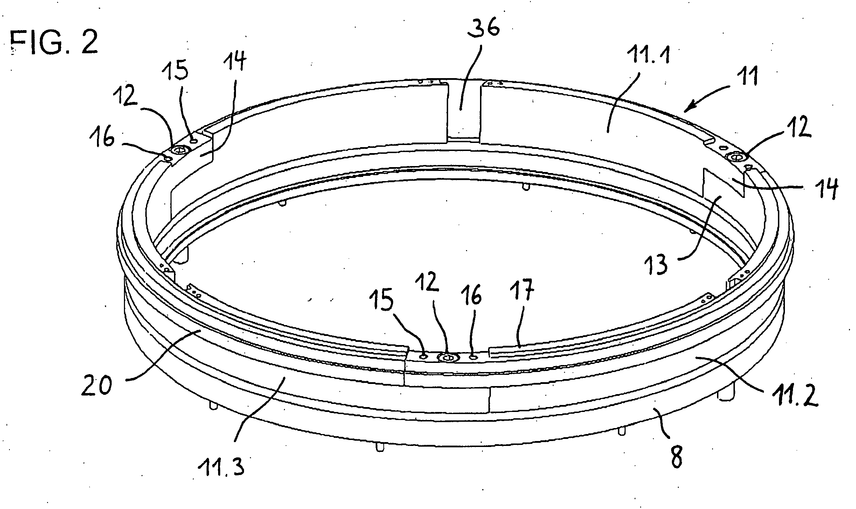

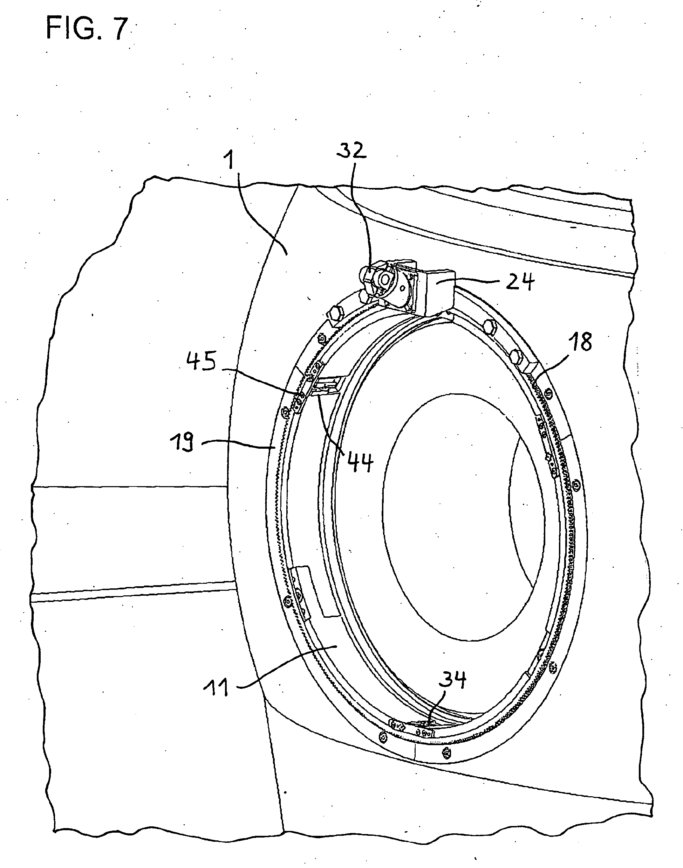

Mit der in den Figuren 2 bis 10 dargestellten Vorrichtung kann die Dichtungsgleitfläche 6 des Flügeltellers 5 mechanisch bearbeitet und so die für eine langjährige Dichtigkeit des Dichtungssystems erforderliche Oberflächengüte wieder hergestellt werden. Ein Ausbau des Turbinen-Laufrades sowie ein Ausbau der jeweiligen Laufschaufel 2 sind dabei nicht erforderlich. Tatsächlich ist die erfindungsgemäße Bearbeitungsvorrichtung so ausgeführt, dass sie in dem eng begrenzten Lichtraumprofil unter der jeweiligen Laufschaufel 2 betrieben werden kann.

Zur mechanischen Bearbeitung der Dichtungsgleitfläche 6 des Flügeltellers werden zuerst der obere Anpressring 10 und die Flügeldichtung (Dichtungspackung) 7 demontiert. Nach der Demontage der Flügeldichtung 7 wird der untere Anpressring (Druckring) 8 mit Halteschrauben auf seine axiale Auflagefläche zurückgespannt, um ausreichend Raum für den Einbau der erfindungsgemäßen Vorrichtung zu schaffen.

Die mobile Bearbeitungsvorrichtung weist einen drehbaren Ringkörper (Drehkörper) 11 auf, der aus mehreren kreisbogenförmigen Segmenten zusammengesetzt ist. Im dargestellten Ausführungsbeispiel sind es drei Segmente 11.1, 11.2, 11.3, die lösbar miteinander verbindbar sind.

Die Segmente 11.1, 11.2, 11.3 weisen stufenförmig ausgebildete Enden auf, so dass sich die einander zugewandten Enden zweier aufeinanderfolgender Segmente überlappen und im Überlappungsbereich miteinander verbindbar sind. Die Verbindung erfolgt mittels Schrauben 12. Hierzu ist in dem unteren Absatz 13 des Segments eine Gewindebohrung eingearbeitet, während in dem überlappenden oberen Absatz 14 eine abgestufte Bohrung zur formschlüssigen Aufnahme des Schraubenkopfes ausgebildet ist. Neben diesen Bohrungen sind in den Absätzen 13, 14 jeweils zusätzliche, miteinander fluchtende Bohrungen 15, 16 zur Aufnahme von Verbindungsstiften (Passstiften) angeordnet. Diese Passstifte fixieren die einzelnen Segmente zueinander, so dass die zylindrische Form nach jeder Montage der Vorrichtung gewährleistet ist.

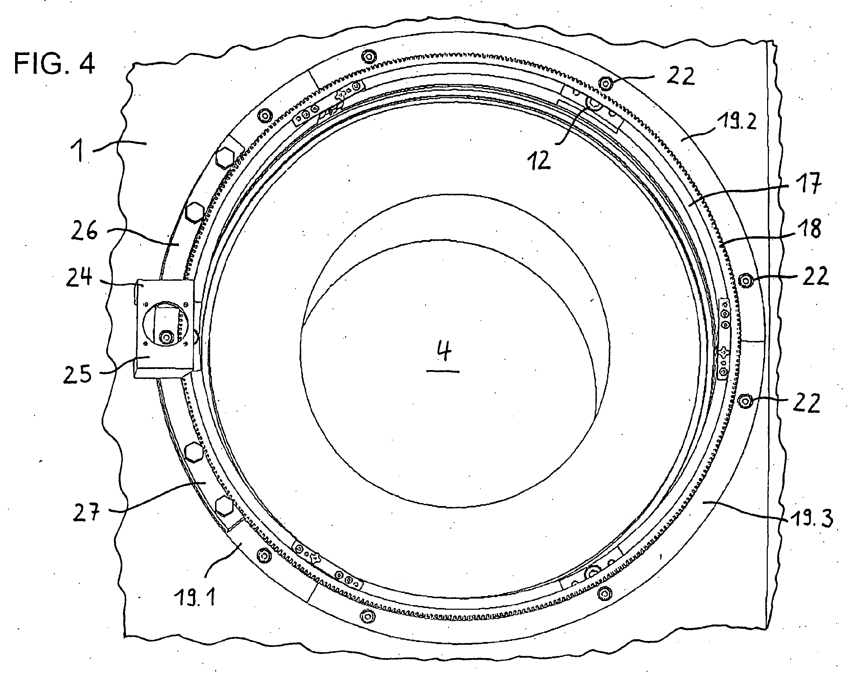

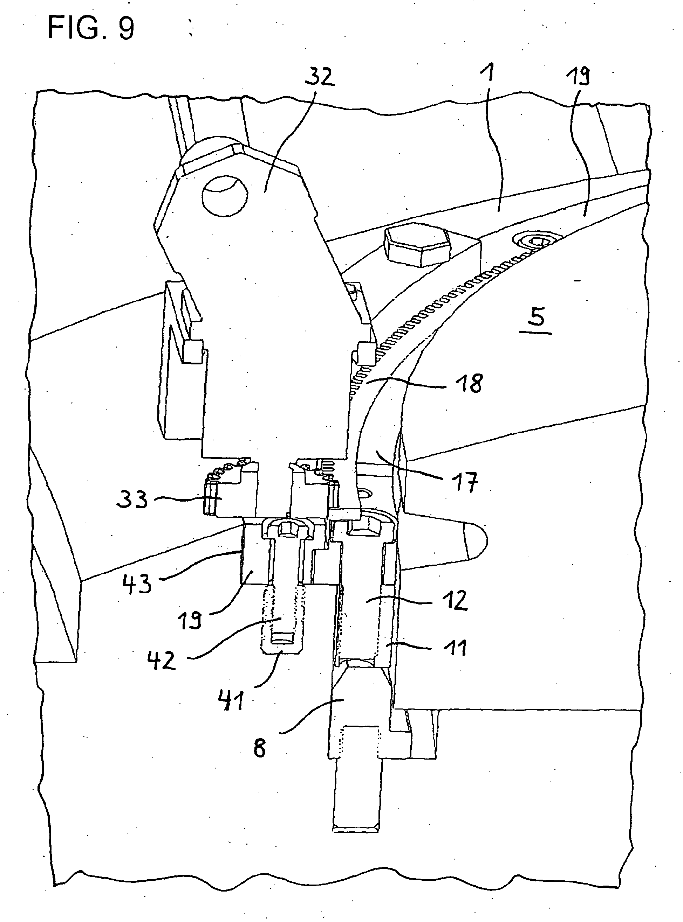

An der Oberseite der Ringkörpersegmente 11.1, 11.2, 11.3 ist jeweils ein stegförmiger Vorsprung 17 ausgebildet, der einen radial außenliegenden Absatz zur Aufnahme eines außenverzahnten Zahnkranzes 18 definiert (vgl. Figuren 4 und 9). Der Zahnkranz 18 ist aus mehreren kreisbogenförmigen Zahnkranzsegmenten zusammengesetzt und mit dem Ringkörper (Drehkörper) 11 drehfest sowie lösbar verbindbar.

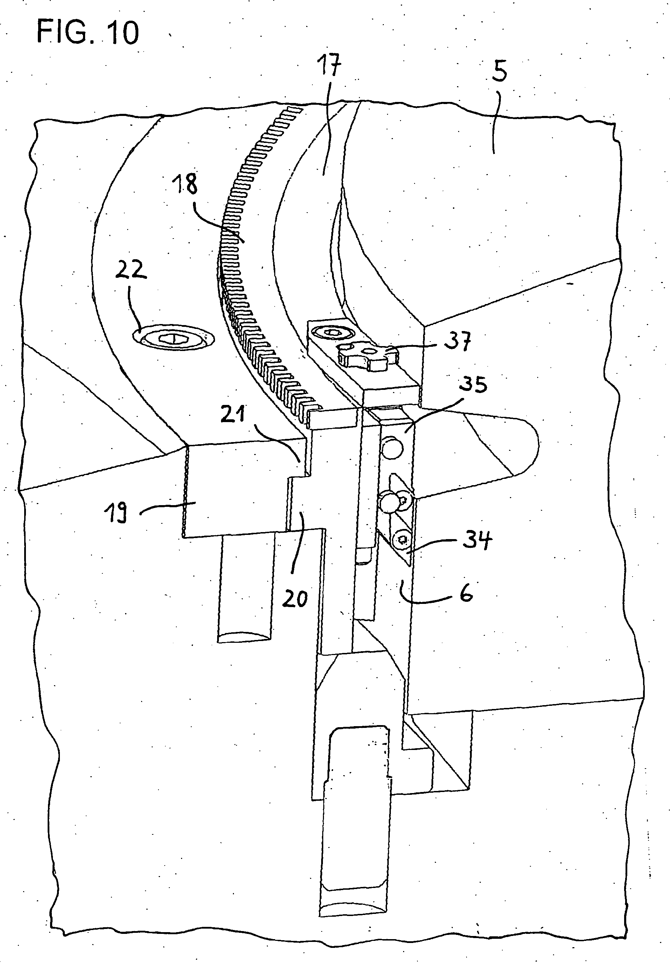

Dem Ringkörper 11 ist eine Gleitführungseinrichtung 19 zugeordnet. Die Gleitführungseinrichtung bildet einen aus mehreren kreisbogenförmigen Segmenten 19.1, 19.2, 19.3 zusammengesetzten Haltering, in dem der Ringkörper 11 formschlüssig und drehbar gehalten ist. Hierzu weist der drehbare Ringkörper 11 einen flanschförmigen, radial nach außen vorstehenden Vorsprung 20 auf, den ein an der Gleitführungseinrichtung 19 vorgesehener Vorsprung 21 mit Spiel übergreift. Beide Vorsprünge 20, 21 sind jeweils umlaufend ausgebildet (vgl. Figuren 2 und 10). Die Radial- und Axialführung 20 kann sowohl zylindrisch, wie dargestellt, als auch prismenförmig ausgeführt sein. Die Lagerung kann wie dargestellt eine Gleitlagerung sein, aber auch die Verwendung von Wälzlagern ist möglich.,

Die Gleitführungseinrichtung (Haltering) 19 weist mehrere Ausnehmungen oder Bohrungen 22 zur Aufnahme von Befestigungsbolzen auf. In dem dargestellten Ausführungsbeispiel weist jedes Halteringsegment 19.1, 19.2, 19.3 drei Bohrungen 22 auf, die mit Gewindebohrungen 23 in der Laufradnabe 1 fluchten, welche der Befestigung des oberen Anpressringes 10 dienen (vgl. Figuren 1, 4 und 7). In die Gewindebohrungen 23 werden Gewindebuchsen 41 eingesetzt, in denen die Halteringe 19.1, 19.2, 19.3 befestigt werden. Dadurch wird eine radiale Verschiebbarkeit des Halteringes 19 erreicht, die eine Zentrierung der Vorrichtung zur Mantelfläche 6 ermöglicht. Die Ausrichtung des Halteringes 19 erfolgt durch Einlegen von kalibrierten Blechen in-den Spalt 43. Auch die Verwendung von Stellschrauben ist möglich.

Mindestens eines (19.1) der Halteringsegmente 19.1, 19.2, 19.3 ist mit zusätzlichen Bohrungen zur Befestigung einer Motorhalterung 24 versehen. Diese zusätzlichen Bohrungen können als Gewindebohrungen ausgeführt sein. Es kann sich dabei aber auch um "normale" Bohrungen handeln, die mit Gewindebohrungen 23 in der Laufradnabe 1 fluchten, welche der Befestigung des oberen Anpressringes 10 dienen.

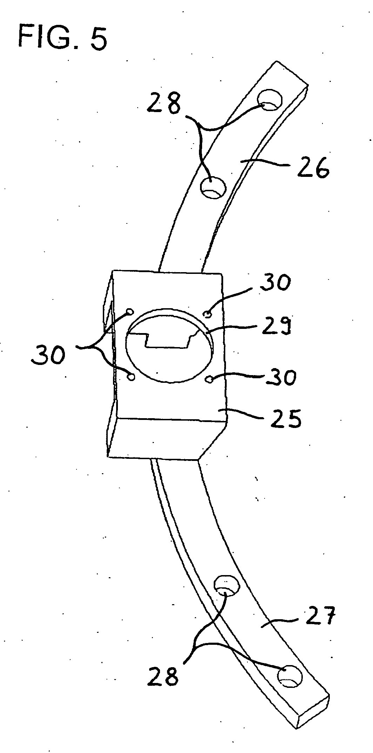

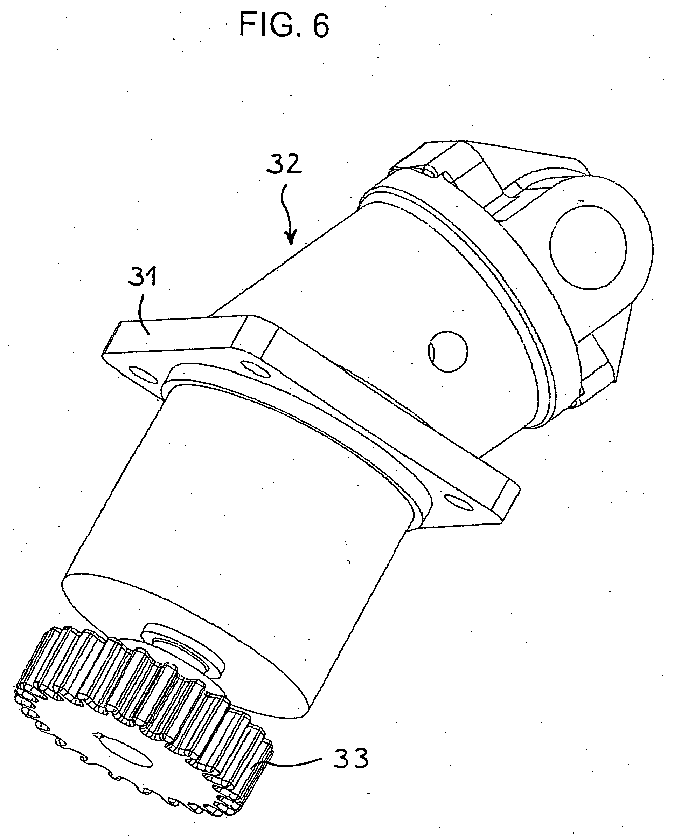

Die in Fig. 5 separat dargestellte Motorhalterung besteht aus einem brückenförmigen Mittelteil 25, an dessen Stützen schmalere Schenkel 26, 27 mit Bohrungen 28 zur Aufnahme von Befestigungsbolzen angeformt bzw. angeschweißt sind. Das Mittelteil 25 weist eine Ausnehmung bzw. Bohrung 29 auf, in deren Randbereich Gewindebohrungen 30 zur Befestigung eines Motorflansches 31 angeordnet sind (vgl. Fig. 6).

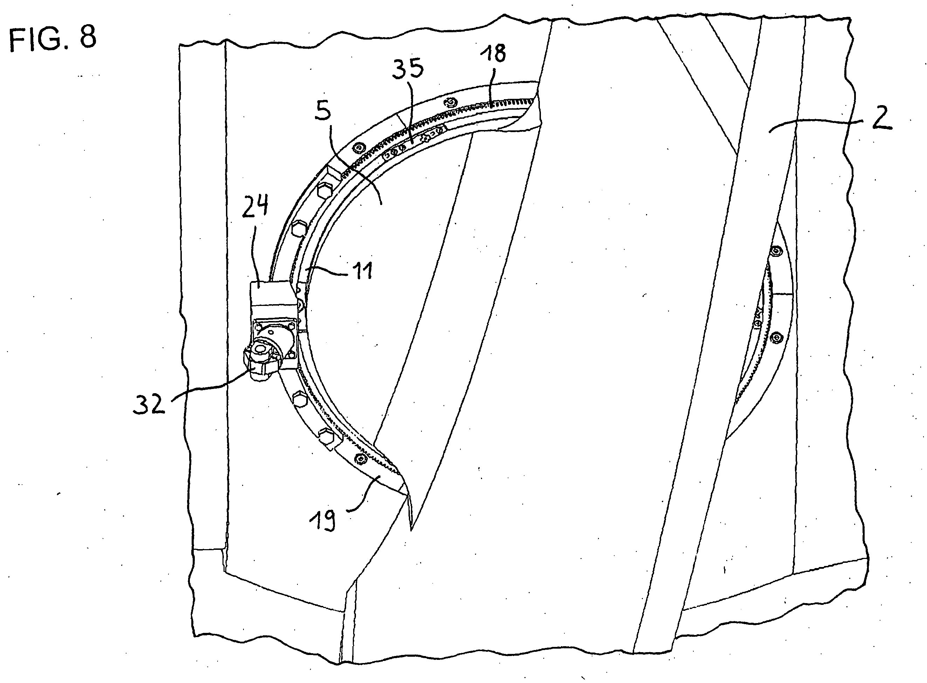

Der in der Motorhalterung 24 montierbare Motor 32 ist insbesondere in Fig. 6 dargestellt. Es handelt sich hierbei um einen drehzahlverstellbaren Motor. Auf der Motorwelle ist ein Zahnrad 33 drehfest angeordnet, das beim Betrieb der erfindungsgemäßen Bearbeitungsvorrichtung mit dem auf dem Ringkörper 11 (Drehkörper) angeordneten Zahnkranz 18 kämmt (vgl. Figuren 8 und 9).

Die Unterseite sowie die Außenseite der Ringkörpersegmente 11.1, 11.2, 11.3 sind glatt ausgebildet, so dass der Ringkörper (Drehkörper) 11 bei seiner Drehung mit relativ geringer Reibung auf dem unteren Anpressring 8 bzw. in dem Haltering 19 gleiten kann.

Der drehbare Ringkörper 11 ist radial verstellbar, so dass er bei einer Exzentrizität des Flügeltellers 5, bedingt durch eventuell vorhandenen Verschleiß der Lagerstellen, auf die Mitte des Flügeltellers 5 ausgerichtet werden kann.

Der drehbare Ringkörper 11 ist mit mindestens einem Bearbeitungswerkzeug 34 versehen. Als Bearbeitungswerkzeuge kommen hier Drehmeißel, Schleifkörper und/oder Fräswerkzeuge in Frage.

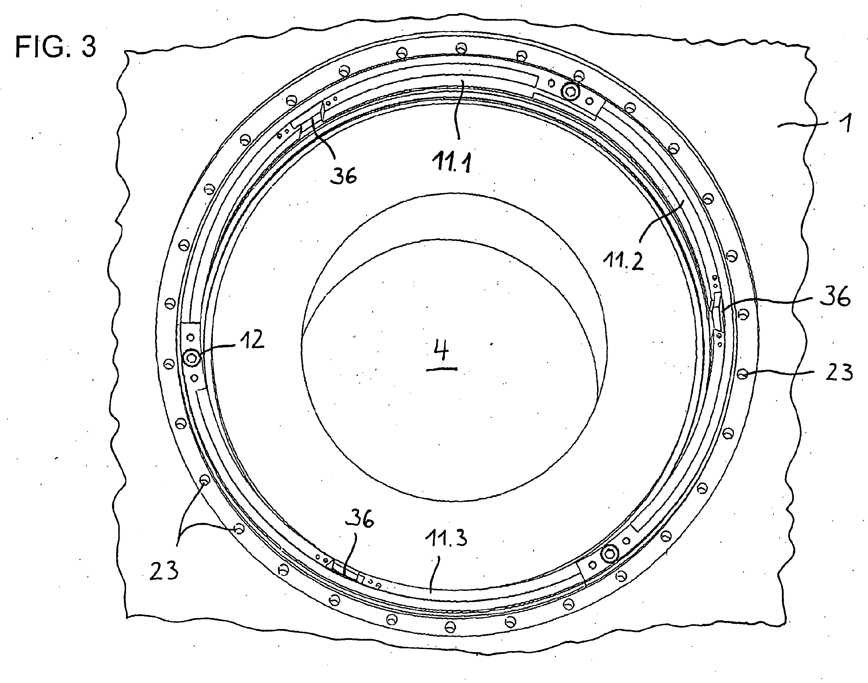

Das Bearbeitungswerkzeug 34 ist an einer Halterung 35 befestigt, die in eine am Ringkörper 11 bzw. Ringkörpersegment ausgebildete Ausnehmung (Aufnahmenut) 36 einsetzbar und mit dem Ringkörper 11 lösbar verbindbar ist. Wie in Fig. 3 zu erkennen ist, weist die Ausnehmung (Aufnahmenut) 36 Hinterschneidungen auf. Die Halterung 35 des Werkzeuges 34 ist so ausgebildet, dass sie die Hinterschneidungen der Ausnehmung 36 formschlüssig hintergreift. Zum spielfreien Einstellen des Werkzeughalters 35 liegt in der Nut 36 ein axial verschiebbarer Keil 44, der von außen mit einer Stellschraube 45 verschoben und fixiert werden kann.

In dem gezeigten Ausführungsbeispiel weist jedes der Ringkörpersegmente 11.1, 11.2, 11.3 eine Ausnehmung 36 zur Aufnahme eines Bearbeitungswerkzeuges 34 auf. Die Werkzeuge 34 werden in der jeweiligen Halterung 35 vor der eigentlichen Verwendung voreingestellt.

Die Bearbeitungswerkzeuge 34 bzw. deren Halterungen 35 sind jeweils mit einer mechanischen oder hydraulischen Zustelleinrichtung 37 versehen. Die mechanische Zustellung erfolgt vorzugsweise mittels Gewindespindeln. Durch das Drehkreuz an der Gewindespindel 37 wird eine automatische Zustellung des Werkzeuges 34 erreicht, da dieses durch einen auf dem Flügelteller 5 angeordneten Nocken bei jeder Umdrehung des Ringkörpers 11 weitergedreht wird. Durch die Anzahl der Nocken und die Anzahl der Drehkreuzzähne kann der Vorschub variiert werden.

Bearbeitungsspäne werden durch Öl- oder Luftzufuhr in die bestehenden Ölablaufbohrungen ausgetragen.

Die Ausführung der Erfindung ist nicht auf das vorstehend beschriebene Ausführungsbeispiel beschränkt. Vielmehr sind mehrere Varianten denkbar, die auch bei grundsätzlich abweichender Gestaltung von der in den Ansprüchen wiedergegebenen Erfindung Gebrauch machen. So liegt beispielsweise auch im Rahmen der Erfindung, die am Außendurchmesser des Dichtungspakets 7 liegende (statische) Dichtfläche in der Laufradnabe 1 mit einer entsprechenden Vorrichtung zu bearbeiten. Das Prinzip der erfindungsgemäßen Vorrichtung und des entsprechenden Bearbeitungsverfahren sind grundsätzlich auch geeignet, diese Dichtungsfläche mechanisch zu bearbeiten. Dieses erfordert natürlich eine etwas anders aufgebaute Vorrichtung, die aber im wesentlichen die gleichen Eigenschaften erfüllt. Diese Anwendung ist, wenn auch weniger häufig, nicht auszuschließen.

Insbesondere kann die erfindungsgemäße Vorrichtung durch Anordnung der Aufnahmenut 36 am Außendurchmesser des Rings 11 dahingehend variiert werden, dass die der Mantelfläche 6 gegenüberliegende statische Dichtfläche in der Laufradnabe 1 ebenfalls bearbeitet werden kann.

## Patentansprüche

1. Vorrichtung zur mechanischen Bearbeitung einer rotationssymmetrischen Fläche, mit einem drehbaren, aus mehreren kreisbogenförmigen Segmenten (11.1, 11.2, 11.3) zusammengesetzten Ringkörper (11), dessen Segmente lösbar miteinander verbindbar sind, mit mindestens einem an dem Ringkörper (11) befestigten Bearbeitungswerkzeug (34) und einer dem drehbaren Ringkörper (11) zugeordneten Antriebseinrichtung (18, 32, 33), mittels welcher der Ringkörper (11) in eine Drehbewegung versetzt wird,
**dadurch gekennzeichnet, dass** die Vorrichtung zur Bearbeitung einer ringförmigen Dichtungsgleitfläche (6) eines Flügeltellers (5) einer Laufschaufel (2) einer Kaplan-Turbine dient, wobei die Vorrichtung derart ausgebildet ist, dass sie nach Entfernen einer der Dichtungsgleitfläche (6) zugeordneten Flügeldichtung (7) an deren Stelle in deren ringförmigen Einbauraum zwischen dem Laufrad (2) und der Laufradnabe (1) einsetzbar ist.

2. Vorrichtung nach Anspruch 1,
**dadurch gekennzeichnet, dass** der drehbare Ringkörper (11) radial verstellbar gelagert ist.

3. Vorrichtung nach Anspruch 1 oder 2,
**dadurch gekennzeichnet, dass** die Antriebseinrichtung aus einem mit dem Ringkörper verbundenen, aus mehreren kreisbogenförmigen Segmenten zusammengesetzten Zahnkranz (18) und einem Motor (31) gebildet ist, wobei der Motor ein mit dem Zahnkranz (18) kämmendes Zahnrad (33) antreibt.

4. Vorrichtung nach einem der Ansprüche 1 bis 3,
**dadurch gekennzeichnet, dass** die Antriebseinrichtung einen drehzahlverstellbaren Motor (32) aufweist.

5. Vorrichtung nach einem der Ansprüche 1 bis 4,
**dadurch gekennzeichnet , dass** das Bearbeitungswerkzeug (34) aus einem Drehmeißel, einem Schleifwerkzeug und/oder einem Fräswerkzeug besteht.

6. Vorrichtung nach einem der Ansprüche 1 bis 5,
**dadurch gekennzeichnet, dass** das Bearbeitungswerkzeug (34) an einer Halterung (35) befestigt ist, die in eine am Ringkörper (11) ausgebildete Ausnehmung (36) einsetzbar und mit dem Ringkörper (11) lösbar verbindbar ist.

7. Vorrichtung nach Anspruch 6,
**dadurch gekennzeichnet, dass** die Ausnehmung (36) mindestens eine Hinterschneidung aufweist, wobei die Halterung (35) des Bearbeitungswerkzeuges (34) die Hinterschneidung der Ausnehmung (36) formschlüssig hintergreift.

8. Vorrichtung nach einem der Ansprüche 1 bis 7,
**dadurch gekennzeichnet, dass** Bearbeitungswerkzeug (34) mit einer mechanischen oder hydraulischen Zustelleinrichtung (37) versehen ist.

9. Vorrichtung nach Anspruch 8,
**dadurch gekennzeichnet, dass** die mechanische Zustelleinrichtung (37) mindestens eine Gewindespindel aufweist.

10. Vorrichtung nach einem der Ansprüche 1 bis 9,
**dadurch gekennzeichnet, dass** die kreisbogenförmigen Segmente (11.1, 11.2, 11.3) des drehbaren Ringkörpers (11) stufenförmig ausgebildete Enden (13, 14) aufweisen, derart, dass sich die einander zugewandten Enden (13, 14) zweier aufeinanderfolgender Segmente überlappen und im Überlappungsbereich miteinander lösbar verbindbar sind.

11. Vorrichtung nach einem der Ansprüche 1 bis 10,
**dadurch gekennzeichnet, dass** der Ringkörper (11) mittels einer Gleitführungseinrichtung (19) gehalten ist.

12. Vorrichtung nach Anspruch 11,
**dadurch gekennzeichnet, dass** die Gleitführungseinrichtung (19) aus einem aus mehreren kreisbogenförmigen Segmenten (19.1, 19.2, 19.3) zusammengesetzten Haltering gebildet ist.

13. Vorrichtung nach Anspruch 11 oder 12,
**dadurch gekennzeichnet, dass** der drehbare Ringkörper (11) einen flanschförmigen, radial nach außen vorstehenden Vorsprung (20) aufweist, den ein an der Gleitführungseinrichtung (19) vorgesehener Vorsprung (21) übergreift.

14. Vorrichtung nach einem der Ansprüche 11 bis 13,
**dadurch gekennzeichnet, dass** die Gleitführungseinrichtung (19) mehrere Bohrungen (22) oder Ausnehmungen zur Aufnahme von Befestigungsbolzen aufweist.

15. Vorrichtung nach einem der Ansprüche 11 bis 14,
**dadurch gekennzeichnet, dass** die Gleitführungseinrichtung (19) mit einer Halterung (24) für einen den Ringkörper (11) antreibenden Motor (32) versehen ist.

16. Vorrichtung nach Anspruch 15,
**dadurch gekenntzeichnet**, dass die Motorhalterung (24) lösbar mit der Gleitführungseinrichtung (19) verbindbar ist.

17. Verfahren zur mechanischen Bearbeitung einer Dichtungsgleitfläche einer Turbine, bei der eine der Dichtungsgleitfläche zugeordnete Dichtung demontiert wird, wodurch ein ringförmiger Einbauraum, welcher zur Aufnahme der Dichtung dient, freigelegt wird,
**dadurch gekennzeichnet, dass** die Turbine eine Kaplan-Turbine ist und dass zur Bearbeitung der Dichtungsgleitfläche des Flügeltellers einer Laufschaufel ohne Ausbau der betreffenden Laufschaufel aus der Kaplan-Turbine in den ringförmigen Einbauraum eine aus mehreren kreisbogenförmigen Segmenten zusammengesetzte Bearbeitungsvorrichtung eingesetzt wird, die einen drehbaren Ringkörper mit mindestens einem daran befestigten Bearbeitungswerkzeug aufweist, wobei die Segmente lösbar miteinander verbunden werden und der Ringkörper mittels einer Antriebseinrichtung in eine Drehbewegung versetzt wird.

18. Verfahren nach Anspruch 17,
**dadurch gekennzeichnet, dass** die Bearbeitungsvorrichtung an der Kaplan-Turbine fixiert wird.

19. Verfahren nach Anspruch 17 oder 18,
**dadurch gekennzeichnet , dass** als Bearbeitungswerkzeug (34) ein Drehmeißel, ein Schleifwerkzeug und/oder ein Fräswerkzeug verwendet wird.

20. Verfahren nach einem der Ansprüche 17 bis 19,
**dadurch gekennzeichnet, dass** das Bearbeitungswerkzeug (34) mittels mindestens einer Gewindespindel (37) oder hydraulisch bezüglich der zu bearbeitenden Dichtungsfläche (6) zugestellt werden.

## Claims

1. Device for mechanical machining of a rotationally symmetrical surface with a rotatable ring body (11) composed of several circular arcuate segments (11.1, 11.2, 11.3), the segments of which are releasably connected together, with at least one machining tool (34) attached to the ring body (11) and a drive device (18, 32, 33) allocated to the rotatable ring body (11) and by means of which the ring body (11) is brought into rotational motion, **characterized in that** the device serves for machining an annular sealing slide surface (6) of a vane plate (5) of a rotor blade (2) of a Kaplan turbine, wherein the device is designed such that after removal of a vane seal (7) allocated to one of the sealing slide surfaces (6), said device can be inserted in its place in its annular installation space between the impeller (2) and the impeller hub (1).

2. Device according to Claim 1, **characterized in that** the rotatable ring body (11) is mounted radially displaceably.

3. Device according to Claim 1 or 2, **characterized in that** the drive device comprises a crown gear (18) connected with the ring body and composed of several circular arcuate segments and a motor (31), wherein the motor drives a pinion (33) intermeshing with the crown gear (18).

4. Device according to any of Claims 1 to 3, **characterized in that** the drive device comprises a speed-adjustable motor (32).

5. Device according to any of Claims 1 to 4, **characterized in that** the machine tool (34) comprises a cutting tool, a grinding tool and/or a milling tool.

6. Device according to any of Claims 1 to 5, **characterized in that** the machine tool (34) is attached to a holder (35) that can be inserted in a recess (36) formed on the ring body (11) and can be connected releasably with the ring body (11).

7. Device according to Claim 6, **characterized in that** the recess (36) has at least one undercut, wherein the holder (35) of the machine tool (34) engages by form fit in the undercut of the recess (36).

8. Device according to any of Claims 1 to 7, **characterized in that** the machine tool (34) is fitted with a mechanical or hydraulic advance device (37).

9. Device according to Claim 8, **characterized in that** the mechanical advance device (37) has at least one threaded spindle.

10. Device according to any of Claims 1 to 9, **characterized in that** the circular arcuate segments (11.1, 11.2, 11.3) of the rotatable ring body (11) have ends (13, 14) formed step-like such that the mutually facing ends (13, 14) of two successive segments overlap and can be connected together releasably in the overlap region.

11. Device according to any of Claims 1 to 10, **characterized in that** the ring body (11) is held by means of a slide guide device (19).

12. Device according to Claim 11, **characterized in that** the slide guide device (19) is formed from a holder composed of several circular arcuate segments (19.1, 19.2, 19.3).

13. Device according to Claim 11 or 12, **characterized in that** the rotatable ring body (11) comprises a flange-like protrusion (20) which extends radially outward and engages over a protrusion (21) provided on the slide guide device (19).

14. Device according to any of Claims 11 to 13, **characterized in that** the slide guide device (19) has several bores (22) or recesses to receive fixing bolts.

15. Device according to any of Claims 11 to 14, **characterized in that** the slide guide device (19) has a holder (24) for a motor (32) driving the ring body (11).

16. Device according to Claim 15, **characterized in that** the motor holder (24) can be connected releasably with the slide guide device (19).

17. Method for mechanical machining of a sealing slide surface of a turbine, in which a seal allocated to the sealing slide surface is removed exposing an annular installation space which serves to receive the seal, **characterized in that** the turbine is a Kaplan turbine and that to machine the sealing slide surface of the vane plate of a rotor blade without removing the rotor blade concerned from the Kaplan turbine, in the annular installation space is inserted a machining device which is composed of several circular arcuate segments and has a rotatable ring body with at least one machine tool attached thereto, wherein the segments are connected together releasably and the ring body is set in a rotational movement by means of a drive device.

18. Method according to Claim 17, **characterized in that** the machining device is fixed to the Kaplan turbine.

19. Method according to Claim 17 or 18, **characterized in that** a cutting tool, a grinding tool and/or a milling tool is used is a machine tool (34).

20. Method according to any of Claims 17 to 19, **characterized in that** the machine tool (34) is advanced by means of at least one threaded spindle (37) or hydraulically in relation to the sealing surface (6) to be machined.

## Revendications

1. Dispositif d'usinage mécanique d'une surface à symétrie de révolution, comprenant un corps annulaire (11) rotatif, constitué de plusieurs segments en forme d'arcs de cercle (11.1, 11.2, 11.3), dont les segments peuvent être connectés de manière détachable les uns aux autres, comprenant au moins un outil d'usinage (34) fixé sur le corps annulaire (11) et un dispositif d'entraînement (18, 32, 33) associé au corps annulaire (11) rotatif, au moyen duquel dispositif d'entraînement le corps annulaire (11) est mis en mouvement de rotation,
**caractérisé en ce que** le dispositif sert à l'usinage d'une surface de glissement de joint d'étanchéité annulaire (6) d'un support de pales (5) d'une couronne mobile (2) d'une turbine Kaplan, le dispositif étant réalisé de telle sorte qu'après l'enlèvement d'un joint d'étanchéité de pale (7) associé à la surface de glissement de joint d'étanchéité (6), il puisse être inséré à sa place dans son espace d'installation annulaire entre la couronne mobile (2) et le moyeu (1) de la couronne mobile.

2. Dispositif selon la revendication 1,
**caractérisé en ce que**
le corps annulaire (11) rotatif est monté de manière déplaçable radialement.

3. Dispositif selon la revendication 1 ou 2,
**caractérisé en ce que**
le dispositif d'entraînement est formé d'une couronne dentée (18) raccordée au corps annulaire, constituée de plusieurs segments en forme d'arcs de cercle, et d'un moteur (31), le moteur entraînant une roue dentée (33) s'engrenant avec la couronne dentée (18).

4. Dispositif selon l'une quelconque des revendications 1 à 3,
**caractérisé en ce que**
le dispositif d'entraînement présente un moteur (32) de régime réglable.

5. Dispositif selon l'une quelconque des revendications 1 à 4,
**caractérisé en ce que**
l'outil d'usinage (34) est constitué d'un outil d'alésage, d'un outil de meulage et/ou d'un outil de fraisage.

6. Dispositif selon l'une quelconque des revendications 1 à 5,
**caractérisé en ce que**
l'outil d'usinage (34) est fixé sur un support (35) qui peut être inséré dans un évidement (36) réalisé sur le corps annulaire (11) et qui peut être raccordé de manière détachable au corps annulaire (11).

7. Dispositif selon la revendication 6,
**caractérisé en ce que** l'évidement (36) présente au moins une contre-dépouille, le support (35) de l'outil d'usinage (34) venant en prise par l'arrière par engagement par correspondance géométrique avec la contre-dépouille de l'évidement (36).

8. Dispositif selon l'une quelconque des revendications 1 à 7,
**caractérisé en ce que**
l'outil d'usinage (34) est muni d'un dispositif d'avance mécanique ou hydraulique (37).

9. Dispositif selon la revendication 8,
**caractérisé en ce que**
le dispositif d'avance mécanique (37) présente au moins une broche filetée.

10. Dispositif selon l'une quelconque des revendications 1 à 9,
**caractérisé en ce que**
les segments en forme d'arcs de cercle (11.1, 11.2, 11.3) du corps annulaire (11) rotatif présentent des extrémités (13, 14) réalisées en forme d'étages, de telle sorte que les extrémités (13, 14) en regard l'une de l'autre de deux segments successifs se chevauchent et puissent être raccordées l'une à l'autre de manière détachable dans la région du chevauchement.

11. Dispositif selon l'une quelconque des revendications 1 à 10,
**caractérisé en ce que**
le corps annulaire (11) est maintenu au moyen d'un dispositif de guidage par glissement (19).

12. Dispositif selon la revendication 11,
**caractérisé en ce que**
le dispositif de guidage par glissement (19) est formé d'une bague de retenue constituée de plusieurs segments en forme d'arcs de cercle (19.1, 19.2, 19.3).

13. Dispositif selon la revendication 11 ou 12,
**caractérisé en ce que**
le corps annulaire (11) rotatif présente une saillie (20) en forme de bride saillant radialement vers l'extérieur, qui vient en prise par le dessus avec une saillie (21) prévue sur le dispositif de guidage par glissement (19).

14. Dispositif selon l'une quelconque des revendications 11 à 13,
**caractérisé en ce que**
le dispositif de guidage par glissement (19) présente plusieurs alésages (22) ou évidements pour recevoir des boulons de fixation.

15. Dispositif selon l'une quelconque des revendications 11 à 14,
**caractérisé en ce que**
le dispositif de guidage par glissement (19) est pourvu d'un support (24) pour un moteur (32) entraînant le corps annulaire (11).

16. Dispositif selon la revendication 15,
**caractérisé en ce que**
le support de moteur (24) peut être connecté de manière amovible au dispositif de guidage par glissement (19).

17. Procédé d'usinage mécanique d'une surface de glissement de joint d'étanchéité d'une turbine, dans lequel un joint d'étanchéité associé à la surface de glissement de joint d'étanchéité est démonté, de sorte qu'un espace d'installation annulaire qui sert à recevoir le joint d'étanchéité soit libéré,
**caractérisé en ce que** la turbine est une turbine Kaplan et **en ce que** pour l'usinage de la surface de glissement de joint d'étanchéité du support de pales d'une couronne mobile sans démontage de la couronne mobile concernée hors de la turbine Kaplan, on insère dans l'espace d'installation annulaire un dispositif d'usinage constitué de plusieurs segments en forme d'arcs de cercle, lequel dispositif d'usinage présente un corps annulaire rotatif avec au moins un outil d'usinage fixé sur celui-ci, les segments étant raccordés de manière détachable les uns aux autres et le corps annulaire étant mis en mouvement de rotation au moyen d'un dispositif d'entraînement.

18. Procédé selon la revendication 17,
**caractérisé en ce que**
le dispositif d'usinage est fixé sur la turbine Kaplan.

19. Procédé selon la revendication 17 ou 18,
**caractérisé en ce que**
l'on utilise comme outil d'usinage (34) un outil d'alésage, un outil de meulage et/ou un outil de fraisage.

20. Procédé selon l'une quelconque des revendications 17 à 19,
**caractérisé en ce que**
l'outil d'usinage (34) peut être avancé au moyen d'au moins une broche filetée (37) ou hydrauliquement par rapport à la surface de joint d'étanchéité (6) à usiner.
